# EUROPEAN PATENT SPECIFICATION

(11) **EP 4 489 362 B1**
(45) Date of publication and mention of the grant of the patent: **18.11.2026**
(21) Application number: 23781313.4
(22) Date of filing: 28.03.2023
(51) Int. Cl.: H04L 41/0894, H04W 8/20, H04W 36/14, H04W 88/14, H04W 88/16

(54) **METHOD AND APPARATUS FOR PROVIDING UE POLICY IN WIRELESS COMMUNICATION SYSTEM**
VERFAHREN UND VORRICHTUNG ZUR BEREITSTELLUNG VON UE-RICHTLINIEN IN EINEM DRAHTLOSKOMMUNIKATIONSSYSTEM
PROCÉDÉ ET APPAREIL POUR LA MISE EN PLACE D'UNE POLITIQUE D'UTILISATION DANS UN SYSTÈME DE COMMUNICATION SANS FIL

(30) Priority: 28.03.2022 KR 20220038240
(43) Date of publication of application: 08.01.2025
(73) Proprietor: Samsung Electronics Co., Ltd., Suwon-si, Gyeonggi-do 16677 (KR)
(72) Inventor: KIM, Dongyeon, Suwon-si, Gyeonggi-do 16677 (KR); LEE, Jicheol, Suwon-si, Gyeonggi-do 16677 (KR); MOON, Sangjun, Suwon-si, Gyeonggi-do 16677 (KR)
(74) Representative: Nederlandsch Octrooibureau
(86) International application number: PCT/KR2023/004127
(87) International publication number: WO 2023/191458

(56) References cited:
- US-A1- 2020 275 331
- US-A1- 2021 385 302
- US-A1- 2021 400 576
- ERICSSON: "Notification of SM Policy Association Establishment", vol. SA WG2, no. Electronic; 20210816 - 20210827, 10 August 2021 (2021-08-10), XP052053467, Retrieved from the Internet <URL:https://ftp.3gpp.org/tsg_sa/WG2_Arch/TSGS2_146E_Electronic_2021-08/Docs/S2-2105420.zip S2-2105420_23.502_Notification_SM Policy Association.docx> [retrieved on 20210810]
- HUAZHANG LYU ET AL: "KI#3 Sol# 33 update to solve the multiple UE policy association issue", vol. SA WG2, no. Online; 20220817 - 20220826, 10 August 2022 (2022-08-10), XP052184703, Retrieved from the Internet <URL:https://www.3gpp.org/ftp/tsg_sa/WG2_Arch/TSGS2_152E_Electronic_2022-08/Docs/S2-2206306.zip S2-2206306_KI#3 Sol# 33 update to solve the multiple UE policy association issue.doc> [retrieved on 20220810]
- HUAWEI, HISILICON: "New Solution for Interworking from 5GS to EPS", 3GPP TSG SA WG3 MEETING #102BIS-E, S3-210899, 22 February 2021 (2021-02-22), XP051980291
- "3rd Generation Partnership Project; Technical Specification Group Services and System Aspects; Procedures for the 5G System (5GS); Stage 2 (Release 17)", 3GPP TS 23.502, no. V17.4.0, 23 March 2022 (2022-03-23), pages 1 - 738, XP052144761
- ERICSSON: "User Plane Integrity Protection Policy Handling in IW handover from 5GS to EPS", 3GPP TSG SA WG3 MEETING #104-E, S3-212772, 9 August 2021 (2021-08-09), XP052063423

## Description

### [Technical Field]

The disclosure relates to a method and device for providing a UE policy in a wireless communication system or a mobile communication system, and more particularly, to a method and device for providing a UE policy in a composite mobile communication system having different communication protocols.

### [Background Art]

5G mobile communication technology defines a wide frequency band to enable fast transmission speed and new services and may be implemented in frequencies below 6GHz ('sub 6GHz'), such as 3.5 GHz, as well as in ultra-high frequency bands ('above 6GHz'), such as 28GHz and 39GHz called millimeter wave (mmWave). Further, 6G mobile communication technology, which is called a beyond 5G system, is considered to be implemented in terahertz bands (e.g., 95GHz to 3 THz) to achieve a transmission speed 50 times faster than 5G mobile communication technology and ultra-low latency reduced by 1/10.

In the early stage of 5G mobile communication technology, standardization was conducted on beamforming and massive MIMO for mitigating propagation pathloss and increasing propagation distance in ultrahigh frequency bands, support for various numerologies for efficient use of ultrahigh frequency resources (e.g., operation of multiple subcarrier gaps), dynamic operation of slot format, initial access technology for supporting multi-beam transmission and broadband, definition and operation of bandwidth part (BWP), new channel coding, such as low density parity check (LDPC) code for massive data transmission and polar code for high-reliable transmission of control information, L2 pre-processing, and network slicing for providing a dedicated network specified for a specific service, so as to meet performance requirements and support services for enhanced mobile broadband (eMBB), ultra-reliable low-latency communications (URLLC), and massive machine-type communications (mMTC).

Currently, improvement and performance enhancement in the initial 5G mobile communication technology is being discussed considering the services that 5G mobile communication technology has intended to support, and physical layer standardization is underway for technology, such as vehicle-to-everything (V2X) for increasing user convenience and assisting autonomous vehicles in driving decisions based on the position and state information transmitted from the VoNR, new radio unlicensed (NR-U) aiming at the system operation matching various regulatory requirements, NR UE power saving, non-terrestrial network (NTN) which is direct communication between UE and satellite to secure coverage in areas where communications with a terrestrial network is impossible, and positioning technology.

Also being standardized are radio interface architecture/protocols for technology of industrial Internet of things (IIoT) for supporting new services through association and fusion with other industries, integrated access and backhaul (IAB) for providing nodes for extending the network service area by supporting an access link with the radio backhaul link, mobility enhancement including conditional handover and dual active protocol stack (DAPS) handover, 2-step RACH for NR to simplify the random access process, as well as system architecture/service fields for 5G baseline architecture (e.g., service based architecture or service based interface) for combining network functions virtualization (NFV) and software-defined networking (SDN) technology and mobile edge computing (MEC) for receiving services based on the position of the UE.

As 5G mobile communication systems are commercialized, soaring connected devices would be connected to communication networks so that reinforcement of the function and performance of the 5G mobile communication system and integrated operation of connected devices are expected to be needed. To that end, new research is to be conducted on, e.g., extended reality (XR) for efficiently supporting, e.g., augmented reality (AR), virtual reality (VR), and mixed reality (MR), and 5G performance enhancement and complexity reduction using artificial intelligence (AI) and machine learning (ML), support for AI services, support for metaverse services, and drone communications.

Further, development of such 5G mobile communication systems may be a basis for multi-antenna transmission technology, such as new waveform for ensuring coverage in 6G mobile communication terahertz bands, full dimensional MIMO (FD-MIMO), array antenna, and large scale antenna, full duplex technology for enhancing the system network and frequency efficiency of 6G mobile communication technology as well as reconfigurable intelligent surface (RIS), high-dimensional space multiplexing using orbital angular momentum (OAM), metamaterial-based lens and antennas to enhance the coverage of terahertz band signals, AI-based communication technology for realizing system optimization by embedding end-to-end AI supporting function and using satellite and artificial intelligence (AI) from the step of design, and next-generation distributed computing technology for implementing services with complexity beyond the limit of the UE operation capability by way of ultrahigh performance communication and computing resources.

In order to meet the demand for wireless data traffic soring since the 4G communication system came to the market, there are ongoing efforts to develop enhanced 5G communication systems or pre-5G communication systems. For the reasons, the 5G communication system or pre-5G communication system is called the beyond 4G network communication system or post LTE system. The 5G communication system defined by the 3GPP is called the new radio (NR) system.

For higher data transmit rates, 5G communication systems are considered to be implemented on ultra-high frequency bands (mmWave), such as, e.g., 60GHz. To mitigate pathloss on the ultra-high frequency band and increase the reach of radio waves, such technologies as beamforming, massive multi-input multi-output (MIMO), full dimensional MIMO (FD-MIMO), array antenna, analog beamforming, and large scale antenna, as adopted for 5G communication systems have been discussed and applied to NR systems.

Also being developed are various technologies for the 5G communication system to have an enhanced network, such as evolved or advanced small cell, cloud radio access network (cloud RAN), ultra-dense network, device-to-device (D2D) communication, wireless backhaul, moving network, cooperative communication, coordinated multi-point (CoMP), and interference cancellation.

There are also other various schemes under development for the 5G system including, e.g., hybrid FSK and QAM modulation (FQAM) and sliding window superposition coding (SWSC), which are advanced coding modulation (ACM) schemes, and filter bank multi-carrier (FBMC), non-orthogonal multiple access (NOMA) and sparse code multiple access (SCMA), which are advanced access schemes.

The Internet is evolving from the human-centered connection network by which humans create and consume information to the Internet of Things (IoT) network by which information is communicated and processed between things or other distributed components. Another arising technology is the Internet of Everything (IoE), which is a combination of the Big data processing technology and the IoT technology through, e.g., a connection with a cloud server. To implement the IoT, technology elements, such as a sensing technology, wired/wireless communication and network infra, service interface technology, and a security technology, are required. There is a recent ongoing research for inter-object connection technologies, such as the sensor network, Machine-to-Machine (M2M), or the Machine-Type Communication (MTC). In the IoT environment may be offered intelligent Internet Technology (IT) services that collect and analyze the data generated by the things connected with one another to create human life a new value. The IoT may have various applications, such as the smart home, smart building, smart city, smart car or connected car, smart grid, health-care, or smart appliance industry, or state-of-art medical services, through conversion or integration of existing information technology (IT) techniques and various industries.

Thus, there are various ongoing efforts to apply the 5G communication system to the IoT network. For example, the sensor network, machine-to-machine (M2M), machine type communication (MTC), or other 5G communication techniques are implemented by schemes, such as beamforming, multi-input multi-output (MIMO), and array antenna schemes. The above-mentioned application of the cloud radio access network (RAN) as a Big data processing technique may be said to be an example of the convergence of the 5G and IoT technologies. 3GPP document S2-2105420 discloses Policy association, wherein signalling between SMF and PCF is described. Document US2021/385302 enumerates entities of core network, including UE-PCF and SMF-PGW.

### [Detailed Description of the Invention]

### [Technical Problem]

5GS recently being commercialized, and LTE and LTE-A systems which are currently providing a mobile communication service, all, are packet-based service providing mobile communication systems. The 5GS is being developed to support interworking with LTE and LTE-A-based evolved packet system (EPS). In a 5G system, a 5G core network provides a UE policy to a UE. When a UE capable of using wireless communication through 5GS and EPS is connected to a network through 5GS supporting EPS/5GS interworking and switches the network connection to the EPS, the 5G core network does not provide the UE policy to the UE any longer, and the UE communicates with the network based on the UE policy that it received before moving to the EPS.

In the current 5G system, when a change occurs to the UE policy and/or UE policy-related information in the 5G core network after an EPS/5GS interworking UE moves from 5GS to EPS, the changed UE policy may not be transferred to the UE through an EPS entity.

Therefore, the disclosure provides a method and device in which a core network provides a UE policy to a UE after the UE moves from 5GS to EPS in a 5G system supporting EPS/5GS interworking.

### [Technical Solution]

The invention is defined by the appended claims.

### [Advantageous Effects]

By the device and method according to various embodiments of the disclosure, in a 5G system supporting EPS/5GS interworking, after a UE moves from 5GS to EPS, a core network may provide a UE policy to the UE.

By the device and method according to various embodiments of the disclosure, while the UE, after moving from 5GS to EPS, does not move back to 5GS, the UE may receive a changed UE policy, rendering it possible to reduce resource waste and block wrong network access, and hence increasing communication stability.

Effects obtainable from the disclosure are not limited to the above-mentioned effects, and other effects not mentioned may be apparent to one of ordinary skill in the art from the following description.

### [Brief Description of the Drawings]

FIG. 1 is a view illustrating a network structure and interface of a 5G system according to an embodiment of the disclosure;
FIG. 2 is a view illustrating a network structure and interface of an EPS/5GS interworking system according to an embodiment of the disclosure;
FIG. 3 is a view illustrating a network structure and interface related to policy control and rate control system of a 5G system according to an embodiment of the disclosure;
FIGS. 4A and 4B are views illustrating a method for a core network to transfer a UE policy to a UE in an EPS/5GS interworking system according to an embodiment of the disclosure;
FIGS. 5A and 5B are views illustrating a method for a core network to transfer a UE policy to a UE in an EPS/5GS interworking system according to an embodiment of the disclosure;
FIG. 6 illustrates a structure of an SMF+PGW-C 600 according to an embodiment of the disclosure; and
FIG. 7 is a view illustrating a structure of a PCF 700 according to an embodiment of the disclosure.

### [Mode for Carrying out the Invention]

Hereinafter, various embodiments of the disclosure are described in detail with reference to the accompanying drawings. In this case, it should be noted that the same components in the accompanying drawings are indicated by the same reference numerals as much as possible. Further, it should be noted that the accompanying drawings of the disclosure are provided to aid understanding of the present invention, and the present invention is not limited to the form or arrangement illustrated in the drawings of the disclosure. When making the gist of the present invention, the detailed description of known functions or configurations is skipped. It should be noted that in the following description, only parts necessary for understanding the operation according to various embodiments of the present invention are described, and descriptions of other parts will be omitted not to make the gist of the present invention unclear. Further, although the disclosure describes various embodiments using terms used in some communication standards (e.g., 3rd generation partnership project (3GPP)), this is merely an example for description. Various embodiments of the disclosure may be easily modified and applied in other communication systems.

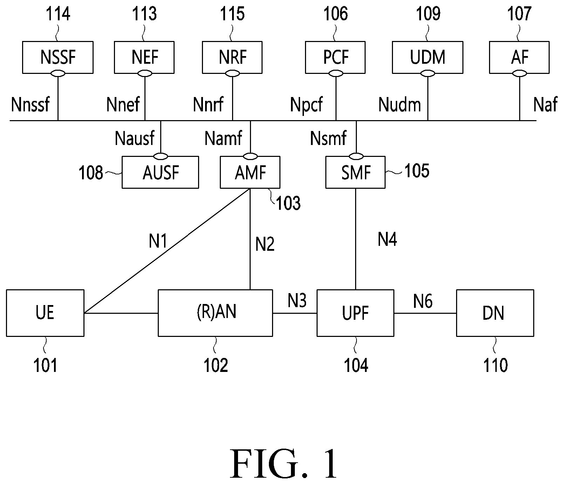

FIG. 1 is a view illustrating a network structure and interface of a 5G system according to an embodiment of the disclosure.

The network entity included in the network architecture of the 5G system of FIG. 1 may include a network function (NF) according to system implementation.

Referring to FIG. 1, the network structure of the 5G system 100 may include various network entities. As an example, the 5G system 100 may include an authentication server function (AUSF) 108, an (core) access and mobility management function (AMF) 103, a session management function (SMF) 105, a policy control function (PCF) 106, an application function (AF) 107, a unified data management (UDM) 109, a data network (DN) 110, a network exposure function (NEF) 113, a network slicing selection function (NSSF) 114, a network repository function (NRF) 115, an edge application service domain repository (EDR) (not shown), an edge application server (EAS) (not shown), an EAS discovery function (EASDF) (not shown), a user plane function (UPF) 104, a (radio) access network ((R)AN) 102, and a UE, i.e., the user equipment (or terminal) 101.

Each NF of the 5G system 100 supports the following functions.

The AUSF 108 processes and stores data for authenticating the UE 101.

The AMF 103 provides functions for per-UE access and mobility management and may connect basically to one AMF per UE. Specifically, the AMF 103 supports such functions as inter-CN node signaling for mobility between 3GPP access networks, radio access network (RAN) CP interface (i.e., N2 interface) termination, NAS signaling termination (N1), NAS signaling security (NAS ciphering) and integrity protection, AS security control, registration management (registration area management), connectivity management, idle mode UE reachability (including controlling and performing paging retransmission), mobility management control (subscription and policy), intra-system mobility and inter-system mobility support, support of network slicing, SMF selection, lawful intercept (for interface to AMF event and LI system), transfer of session management (SM) messages between UE and SMF, transparent proxy for SM message routing, access authentication, access authorization including a roaming authority check, transfer of SMS messages between UE and SMSF, security anchor function (SEA), and security context management (SCM). All or some of the functions of the AMF 103 may be supported in a single instance of one AMF.

The DN 110 means, e.g., an operator service, Internet access, or a third party service. The DN 110 transmits a downlink protocol data unit (PDU) to the UPF 104 or receives a PDU transmitted from UE 101 from UPF 104.

The PCF 106 receives information about packet flow from application server and provides the function of determining the policy such as mobility management or session management. Specifically, the PCF 106 supports functions such as support of a signalized policy framework for controlling network operations, providing a policy rule to allow CP function(s) (e.g., AMF or SMF)to execute a policy rule, and implementation of a front end for accessing subscription information related to policy decision in the user data repository (UDR).

The SMF 105 provides session management function and, if UE has multiple sessions, this may be managed per session by a different SMF. Specifically, the SMF 105 supports such functions as session management (e.g., session establishment, modification, and release including maintaining tunnel between the UPF 104 and the (R)AN 102 node), UE IP address allocation and management (optionally including authentication), selection and control of a UP function, traffic steering settings for routing traffic to a proper destination in UPF 104, interface termination towards policy control functions, execution of control part of policy and QoS, lawful intercept (for interface to SM event and LI system), termination of SM part of NAS message, downlink data notification, AN-specific SM information publisher (transferred via the AMF 103 and N2 to the (R)AN 102), SSC mode decision of session, and roaming function. All or some of the functions of the SMF 105 may be supported in a single instance of one SMF.

The UDM 109 stores, e.g., user's subscription data, policy data. The UDM 109 includes two parts, i.e., application front end (FE) (not shown) and user data repository (UDR) (not shown).

FE includes UDM FE in charge of location management, subscription management, and credential processing, and PCF in charge of policy control. The UDR stores data required for the functions provided by UDM-FE and the policy profile required by PCF. Data stored in UDR includes policy data and user subscription data including session-related subscription data and access and mobility-related subscription data, security credential, and subscription identity. The UDM-FE accesses the subscription information stored in UDR and supports such functions as authentication credential processing, user identification handling, access authentication, registration/mobility management, subscription management, and SMS management.

The UPF 104 transfers the downlink PDU, received from the DN 110, to the UE 101 via the (R)AN 102 and transfers the PDU, received from the UE 101 via the (R)AN 102, to the DN 110. Specifically, the UPF 104 supports such functions as anchor point for intra/inter RAT mobility, external PDU session point of interconnection to data network, packet routing and forwarding, packet inspection and user plane part of policy rule, lawful intercept, traffic usage reporting, uplink classifier for supporting routing of traffic flow to data network, branching point for supporting multi-home PDU session, QoS handling (e.g., packet filtering, gating, uplink/downlink rate execution) for user plane, uplink traffic verification (SDF mapping between service data flow (SDF) and QoS flow), transport level packet marking in uplink and downlink, downlink packet buffering, and downlink data notification triggering. All or some of the functions of the UPF 104 may be supported in a single instance of one UPF.

The AF 107 interacts with 3GPP core network for providing services (e.g., supporting such functions as application influence on traffic routing, network capability exposure approach, and interactions with policy framework for policy control).

The (R)AN 102 collectively refers to new radio access technologies that support both E-UTRA (evolved E-UTRA) which is an evolution from 4G radio access technology and new radio access technology (NR: New Radio) (e.g., gNB).

gNB supports such functions as functions for radio resource management (i.e., radio bearer control, radio admission control, connection mobility control, dynamic allocation of resources (i.e., scheduling) to UE on uplink/downlink), internet protocol (IP) header compression, encryption and integrity protection of user data stream, where routing to AMF is not determined from information provided to UE, selection of an AMF when UE attaches, routing of user plane data to UPF(s), routing of control plane information to AMF, connection setup and release, scheduling and transmission (generated from AMF) of paging message, scheduling and transmission (generated from AMF or operating and maintenance (O&M)) of system broadcast information, measurement and measurement reporting configuration for mobility and scheduling, transport level packet marking on uplink, session management, support of network slicing, QoS flow management and mapping to data radio bearer, support of UE in inactive mode, distribution of NAS messages, NAS node selection, radio access network sharing, dual connectivity, and tight interworking between NR and E-UTRA.

UE 101 means a user device. The user device may be referred to as a terminal, mobile equipment (ME), or mobile station (MS). Further, the user device may be a portable device, such as a laptop computer, mobile phone, personal digital assistant (PDA), smartphone, or multimedia device or may be a non-portable device, e.g., a personal computer (PC) or vehicle-mounted device.

The NEF 113 provides a means to safely expose capabilities and services for, e.g., third party, internal exposure/re-exposure, application functions, and edge computing, provided by the 3GPP network functions. The NEF 111 receives information (based on exposed capability(ies) of other NF(s)) from other NF(s). The NEF 111 may store the received information as structured data using a standardized interface to the data storage network function. The stored information may be re-exposed to other NF(s) and AF(s)by NEF and be used for other purposes, e.g., analysis.

The NRF 115 supports service discovery function. receives an NF discovery request from an NF instance and provides discovered NF instance information to the NF instance. further maintains available NF instances and their supporting services.

Meanwhile, although FIG. 1 illustrates an example reference model in which the UE 101 accesses one DN 110 using one PDU session for ease of description, the disclosure is not limited thereto.

The UE 101 may simultaneously access two data networks (i.e., local and central) using multiple PDU sessions. In this case, two SMFs may be selected for different PDU sessions. However, each SMF may have the capability of controlling both the local and central UPFs in the PDU session.

Further, the UE 101 may simultaneously access two (i.e., local and central) data networks provided in a single PDU session.

The NSSF 114 may select a set of network slice instances serving the UE 101. Further, the NSSF 114 may determine granted network slice selection assistance information (NSSAI) and may perform mapping to subscribed single-network slice selection assistance information (S-NSSAI), if necessary. Further, the NSSF 114 may determine the configured NSSAI and may perform mapping to subscribed S-NSSAIs, if necessary. Further, the NSSF 114 may determine the AMF set used to serve the UE or query the NRF 115 according to the configuration to thereby determine a list of candidate AMFs.

The NRF 115 supports service discovery function. receives an NF discovery request from an NF instance and provides discovered NF instance information to the NF instance. further maintains available NF instances and their supporting services.

In the 3GPP system, a conceptual link connecting NFs in the 5G system is defined as a reference point. Example reference points included in the 5G system architecture represented in FIG. 1 are provided as follows.
- N1: the reference point between the UE and the AMF
- N2: Reference point between (R)AN and AMF
- N3: Reference point between (R)AN and UPF
- N4: Reference point between SMF and UPF
- N5: Reference point between PCF and AF
- N6: Reference point between UPF and data network
- N7: Reference point between SMF and PCF
- N8: the reference point between the UDM and the AMF
- N9: Reference point between two core UPFs
- N10: Reference point between UDM and SMF
- N11: Reference point between AMF and SMF
- N12: Reference point between AMF and AUSF
- N13: the reference point between UDM and authentication server function (AUSF)
- N14: the reference point between two AMFs
- N15: the reference point between PCF and AMF in non-roaming scenario and reference point between PCF in visited network and AMF in roaming scenario

In the following description, terminal may refer to the UE 101, and the terms "UE" and "terminal" may be interchangeably used. In this case, terminal should be appreciated as UE 101 unless defined otherwise.

**[Table 1]**

| URSP Rules | | | | | | | |
|---|---|---|---|---|---|---|---|
| P | Traffic Descriptor (TD) | P | Route Selection Component (RSC) | | | | |
| | APPID, DNN, IP, FQDN, CC | | S-NSSAI | DNN | SSC Mode | PDU-Type | Access-Type |
| 1 | App# 1 | 1 | S-NSSAI#1 | DNN#1 | SSC#3 | IPv4 | 3GPP |
| 2 | App#2 | 1 | S-NSSAI#2 | DNN#2 | SSC#1 | IPv4/v6 | 3GPP |
| | | 2 | S-NSSAI#2 | DNN#2 | - | - | Non-3GPP |
| 4 | App# 1, | 1 | S- | DNN#1 | - | - | Non- |
| | CC=internet, supl | | NSSAI#1 | | | | 3GPP |
| 5 | App#3, CC=ims | 1 | S-NSSAI#3 | DNN#3 | - | - | Multi-Access |
| 6 | App# 1 | 1 | S-NSSAI#1 | DNN#1 | - | - | Multi-Access |
| 7 | * (match all) | 1 | S-NSSAI#4 | DNN#4 | SSC#3 | - | - |

Table 1 shows an example of the URSP rule.

In 5GC, the PCF may provide policy information to the UE, and the UE policy information may include a UE route selection policy (URSP).

The URSP is used by the UE and may be used to determine whether the application detected by the UE may be associated with the already established PDU session, may be offloaded to the non-3GPP access present outside the PDU session, may be routed through the ProSe Layer-3 UE-to-Network relay present outside the PDU session, or may be associated with a new PDU session established. The URSP may include one or more URSP rules, and one URSP rule may include one traffic descriptor and one or more route selection components (RSCs). Table 1 describes an example of the URSP rule.

The traffic descriptor (TD) may include mapping criteria for identifying the detected application or traffic of the application. A specific example is described below.
a) Application descriptor: is information that may refer to the application of the UE. For example, the application descriptor may include an APPID including an OSID and an OSAPPID.
b) IP descriptor: indicates the IP address indicating the destination address of the IP packet transmitted by the UE. It may include an IP 3-tuple, i.e., an IP destination address, a port number, and a protocol.
c) Domain descriptor: represents the destination address of the server to which the UE connects in the form of a fully qualified domain name (FQDN).
d) Non-IP descriptor: is information capable of designating a destination of non-IP data.
e) DNN: is the data network name
f) Connection capability (CC): corresponds to type information capable of designating the characteristics of connected traffic, and may have values such as IP multimedia subsystem (IMS), multimedia message service (MMS), and Internet.
   The route selection component (RSC) may include, when a traffic descriptor for identifying the application detected by the UE is specified, attribute information about the PDU session for determining which PDU session the application or the application traffic is to be associated with. A specific example is described below.
g) SSC Mode Selection: is an element that designates session and service continuity, and may have values such as SSC Mode 1, SSC Mode 2, and SSC Mode 3.
h) Network Slice Selection: is information that may specify a network slice.
i) DNN Selection: is the data network name.
j) PDU Session Type Selection: is an element that may designate the type of PDU-session that may designate IPv4, IPv6, or IPv4v6, or Ethernet, Non-IP.
k) Non-Seamless Offload indication: indicates that application traffic may be offloaded through non-3GPP access present outside the PDU session.
l) ProSe Layer-3 UE-to-Network Relay Offload indication: indicates that application traffic may be offloaded through a ProSe Layer-3 UE-to-Network Relay present outside the PDU session.
m) Access Type preference: is an element denoting, e.g., whether the PDU session is a PDU session connected via 3GPP access, a session connected via Non-3GPP access, or a session that supports multi-access connection using both 3GPP access and Non-3GPP access.
n) PDU Session Pair ID: is an element that indicates an identifier where application traffic is shared in a redundant PDU session.
o) Redundancy Sequence Number (RSN): is an element denoting the identifier used during redundant transmission.

Multiple URSP rules may be divided within the policy section (PS) of the UE policy container. In an embodiment of the disclosure, the plurality of URSP rules may be divided into a plurality of policy sections so as not to exceed the maximum allowable transmission size of the NAS layer. One URSP rule may not be divided into two PSs. One complete URSP rule may have to be included in one policy section.

Each of the USRP rules has a priority. According to an embodiment of the disclosure, each URSP rule may include a URSP rule identifier capable of identifying the URSP rule. More specifically, the URSP rule identifier may refer to a traffic parameter by which the UE may distinguish a UE application.

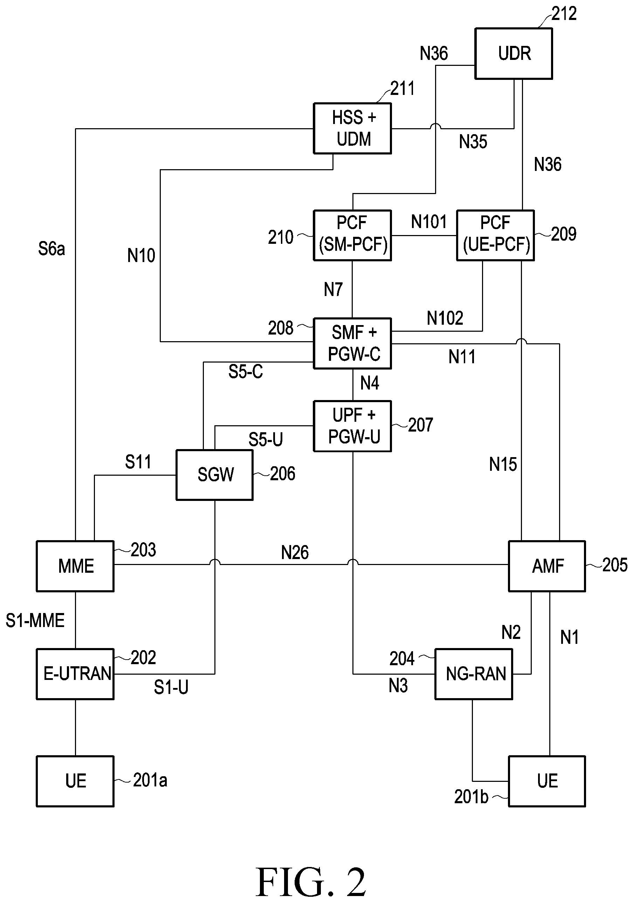

FIG. 2 is a view illustrating a network structure and interface of an EPS/5GS interworking system according to an embodiment of the disclosure.

The 5GS may include a new radio (NR) base station (radio access node (NG-RAN) or next generation node B (gNB)) 204 for radio access of the UE 201b, an access and mobility management function (AMF) 205, and, although not shown in FIG. 2, may also include a session management function (SMF), a user plane function (UPF), a policy control function PCF), a network slice selection function (NSSF), a unified data management (UDM), and a unified data repository (UDR).

The EPS may include an E-UTRA base station (universal mobile telecommunications system (UMTS)) terrestrial radio access network (E-UTRAN) or an evolved node B (eNB)) 202 for radio access of the UE 201a, a mobility management entity (MME) 203, a serving gateway (SGW) 206, a packet data network gateway (PGW) (PGW may include a PGW-U and a PGW-C), a policy and charging rule function (PCRF), a home subscriber server (HSS), or the like.

According to an embodiment, the AMF and the MME may be network functions (NFs) for managing wireless network access and mobility for the UE. The SMF, SGW, and PGW are NFs that manage a session for the UE. The session information may include quality of service (QoS) information, charging information, and packet processing information. Further, the UPF and PGW are NFs that process user plane traffic and are controlled by the SMF and SGW. The PCF and PCRF may be NFs that manage operator policy and/or PLMN policy for providing a service in a wireless communication system. Further, the PCF may be divided into a PCF in charge of an access and mobility (AM) policy and UE policy and a PCF in charge of session management (SM) policy. The PCF in charge of AM/UE policy and the PCF in charge of SM policy may be logically or physically separated NFs or may be logically or physically one NF. The UDM and HSS may be NFs for storing and managing subscriber information (UE subscription) of the UE. The UDR may be an NF or a database (DB) that stores and manages data. The UDR 212 may store subscription information for the UE and may provide the UDM with the subscription information for the UE. Further, the UDR 212 may store operator policy information and may provide operator policy information to the PCF. The NSSF may be an NF that selects the network slice instance serving the UE or determines the network slice selection assistance information (NSSAI).

The instance may refer to a state in which a specific NF exists in the form of a software code and is executable by being assigned a physical or/and logical resource from a physical computing system (e.g., a specific computing system present on a core network) to perform the function of the NF. For example, AMF instance, SMF instance, and NSSF instance may mean a state in which a physical and/or logical resource is assigned from a specific computing system present on a core network to perform the AMF, SMF, and NSSF operation, respectively. Thus, the AMF instance, SMF instance, and NSSF instance which receive and use a physical and/or logical resource from a specific computing system present on a network may perform the same operations as when there a physical AMF, SMF, and NSSF device exists.

The UDM of 5GS and HSS of EPS may be configured as one combo node (referred to as UDM+HSS) 211. The UDM+HSS node 211 may store subscriber information for the UE. The SMF of 5GS and PGW-C of EPS may be configured as one combo node (referred to as SMF+PGW-C) 208. The PCF of 5GS and the policy control and charging rules function (PCRF) of EPS may be configured as one combo node (referred to as PCF PCRF). The UPF of 5GS and PGW-U of EPS may be configured as one combo node (referred to as UPF+PGW-U) 207. The UE may access the MME of the EPS through the E-UTRA base station and use the EPS network service. Further, the UE may access the AMF of 5GS through the NR base station to use the 5GS network service. In FIG. 2, the same reference denotations were used for the UE connected to EPS and the UE connected to 5GS. This is to mean that the UE may connect to EPS or may connect to 5GS.

In this way, one NF or network entity may simultaneously support different network systems, and such NF, network node, or network entity may be referred to as the previously described combo node, combo NF, combined node, combined NF, interworking node, or interworking NF. Further, the function of the NF exemplified as the combo node may be implemented through interworking between two or more network entities. Further, NFs simultaneously supporting different network systems may be indicated using the symbol "+" or "/" for convenience of illustration and description. For example, when SMF and PGW-C are configured as one combo node, they may be expressed as PGW-C/SMF, PGW-C+SMF, SMF/PGW-C, or SMF+PGW-C.

The UE 201a or 201b may access the data network (e.g., a network providing an Internet service) through the 5GS or EPS system to establish a session. In this case, the UE may discern each data network by an identifier called a data network name (DNN) or access point name (APN). To distinguish data networks, the 5GS may use the DNN and the EPS may use the APN. The DNN and APN may be used to determine, e.g., the NF related to the user plane, inter-NF interface, and user policy when the UE establishes a session with the network system. The DNN and APN may be understood as equivalent information and transfer the same information. The DNN may be used, e.g., to select SMF and UPF(s) for the PDU session and may be used to select the interface(s) (e.g., N6 interface) between the data network and the UPF for the PDU session. The DNN may be used to determine a policy of a mobile communication carrier to be applied to the PDU session.

In the following embodiments, combo nodes, such as UDM+HSS node, PCF+PCRF node, SMF+PGW-C node, UPF+PGW-C node, or the like are described with the term "node" omitted for convenience of description. Further, in the following embodiments, the definition of the message made in one embodiment may be applied to have the same meaning in other embodiments using the same message.

The PCF may be divided into a session management-policy control function (SM-PCF) 210 responsible for session management policy (SM policy) and a UE-policy control function (UE-PCF) 209 responsible for mobility management policy (AM policy) and/or UE policy. The SM-PCF 210 may be connected to the SMF 208 through the N7 interface, but may not be connected to the AMF 205. In other words, the SM-PCF 210 may not support the N15 interface. The UE-PCF 209 may be connected to the AMF 205 through the N15 interface, but may not be connected to the SMF 208. In other words, the UE-PCF 209 may not support the N7 interface. The SM-PCF and the UE-PCF may be physically and/or logically positioned in one device or one PCF, but may be distinguished by different PCF instances.

The UE policy that the PCF provides to the UE may include an access network discovery & selection policy, a UE route selection policy, a vehicle-to-everything (V2X) policy, and/or a ProSe policy.

Access Network Discovery & Selection Policy (ANDSP): Contains policy information required when the UE selects a non-3GPP access network.

UE Route Selection Policy (URSP): Contains policy information required to route traffic out of the UE.

V2X Policy (V2XP): Contains policy information that provides configuration parameters required for the UE to perform V2X communication.

ProSe Policy (ProSeP): Contains policy information that provides configuration parameters required for the UE to perform ProSe direct discovery, ProSe direct communication, ProSe UE-to-network relay and remote UE communication.

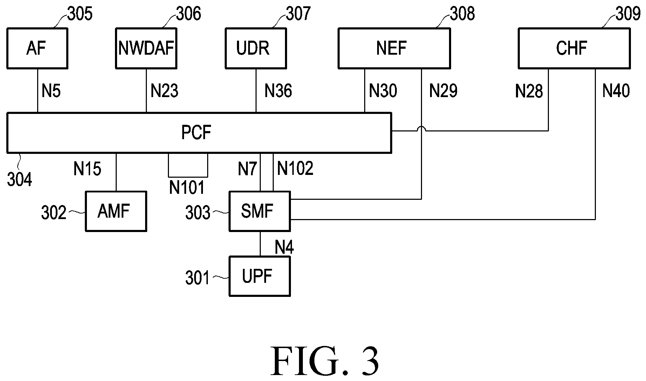

FIG. 3 is a view illustrating a network structure and interface related to policy control and rate control system of a 5G system according to an embodiment of the disclosure.

The policy control function (PCF) 304 may serve as an integrated control framework that controls network operations.

The application function (AF) 305 may provide session-related information to the charging function to support rule creation.

The network data analytics function (NWDAF) 306 may collect data from any NF included in the core network. In this case, the NWDAF and the counterpart NF should belong to the same PLMN.

The unified data repository (UDR) 307 may provide subscriber information data (subscription data), policy data, structured data for exposure, and application data to the UDM (not shown), the PCF 304, the NEF 308, or the like.

The network exposure function (NEF) 308 may serve to securely expose network services and functions.

The charging function (CHF) 309 communicates with the 5G core network and may provide a charging system related to the use of network resources.

One PCF instance may not simultaneously support N15 and N7.
- N15: the reference point between the AMF 302 and the PCF 304
- N7: the reference point between the SMF 303 and the PCF 304
- N4: the reference point between the SMF 303 and the UPF 301
- N5: the reference point between the AF 305 and the PCF 304
- N23: the reference point between the NWDAF 306 and the PCF 304
- N36: the reference point between the UDR 307 and the PCF 304
- N30: the reference point between the NEF 308 and the PCF 304
- N29: the reference point between the NEF 302 and the SMF 303
- N28: the reference point between the CHF 309 and the PCF 304
- N40: the reference point between the CHF 309 and the SMF 303
- N101: the reference point between the PCF instance supporting N15 and the PCF instance supporting N7
- N102: the reference point between the SMF and the PCF supporting N15

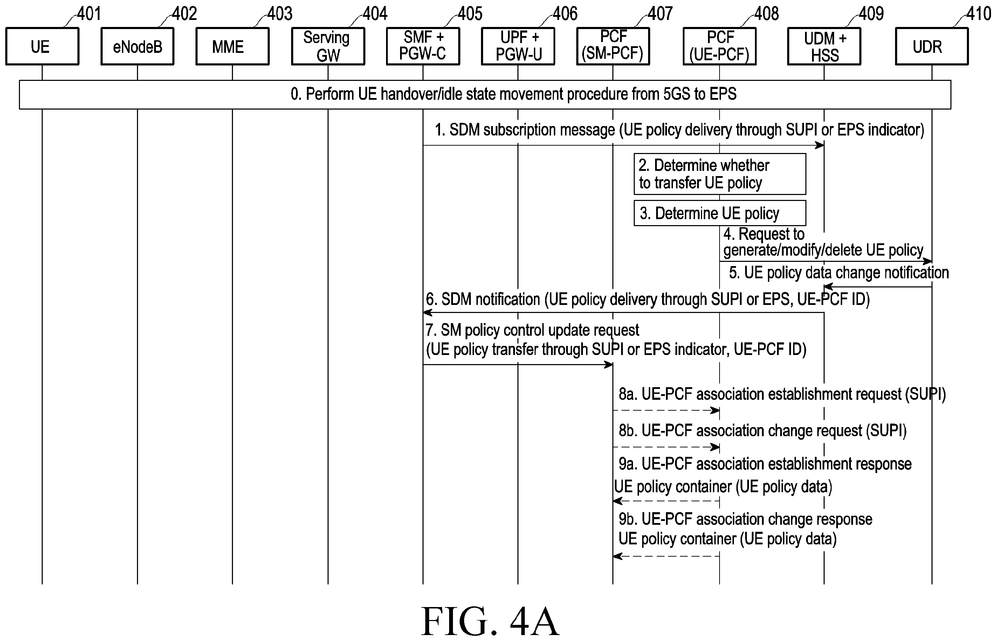

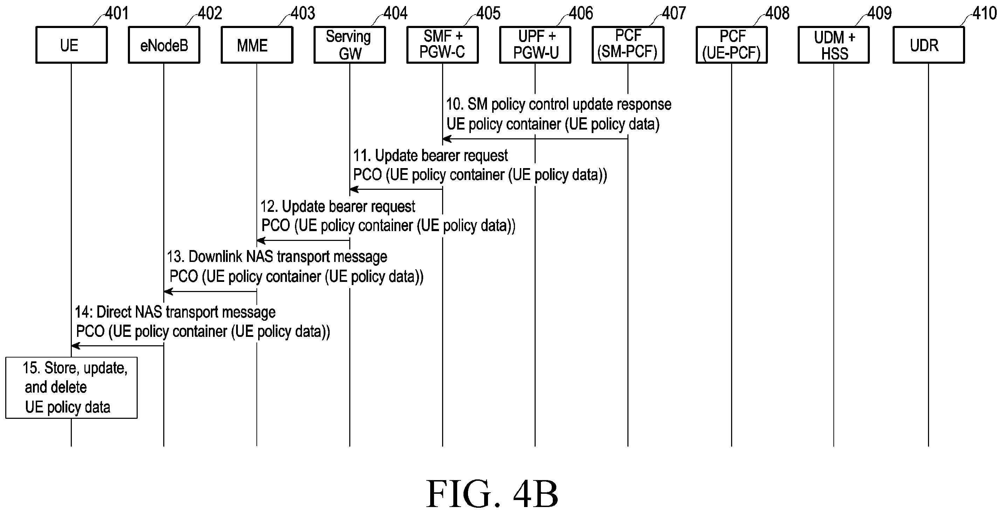

FIGS. 4A and 4B are views illustrating a method for a core network to transfer a UE policy to a UE in an EPS/5GS interworking system according to an embodiment of the disclosure.

Step 0: A handover procedure or an idle state movement procedure may be performed so that the UE connected to the network through the 5GS may be connected to the network through the EPS. The procedure for moving the network may include a process in which the UE is registered (attach) in the EPS through a tracking area update procedure, a process in which the UE establishes an EPS connection, a process in which the SMF+PGW-C maintains information related to the PDU session used by the UE in the 5GS, and a process in which the UE deletes information unnecessary in the EPS (e.g., SM context, AM context, UE context, SM policy, AM policy, UE policy, 5GS parameter, or the like) while moving the network to the EPS.

Step 1: The SMF+PGW-C 405 may notify the UDM+HSS 409 that the UE policy may be transferred to the currently connected UE through the EPS. In determining whether the UE policy may be transferred to the currently connected UE 401 through the EPS, the SMF+PGW-C 405 may refer to (1) whether the UE is a UE connectable to the 5GS and the EPS, (2) whether the UE is currently connected through the EPS, (3) a preferred network of the UE, or the like for the currently connected UE. In this case, the SMF+PGW-C 405 may provide the UE identifier (e.g., SUPI) and an indicator (e.g., UE policy delivery over EPS indication) indicating that the UE policy may be transferred to the UE 401 through the EPS to the UDM+HSS 409. For example, the SMF+PGW-C 405 may transmit a subscriber data management (SDM) subscription message to the UDM+HSS 409. The operation of step 1 may be performed before step 0, during step 0, or after step 0.

Step 2: The UE-PCF 408 may determine whether UE policy information (e.g., URSP) should be transmitted to the UE 401. When a change (including generation, modification, deletion, or the like) occurs in UE policy information owned by the UE-PCF 408, the UE-PCF 408, the UE-PCF 408 may determine that the UE policy information should be transmitted to the UE 401 when it is notified by the UDR, NWDAF, AF, or another NF, not shown, that the change has occurred, or when it is requested to change the UE policy information.

Step 3: The UE-PCF 408 may determine a UE policy. The UE-PCF 408 may determine a target UE for which UE policy information needs to be changed. The target UE may include one or more UEs or one UE group.

Step 4: The UE-PCF 408 may transmit the changed UE policy information to the UDR 410. The changes in UE policy information may include generating, modifying, and deleting UE policy information. According to an embodiment, the UE policy information may be included in the UE policy change request message.

Step 5: The UDR 410 may notify the UDM+HSS 409 that the UE policy data has been changed.

Step 6: The UDM+HSS 409 may notify the SMF+PGW-C 405 that the UE policy data has been changed and may be provided to the UE 501 through the EPS. Here, the UDM+HSS 409 may provide a UE identifier (e.g., SUPI), an indicator (e.g., UE policy delivery over EPS indication) indicating that UE policy data may be provided to the UE through the EPS, and a UE-PCF identifier (e.g., PCF ID of the UE-PCF and PCF instance ID of the UE-PCF). The UDM+HSS 409 may transmit a subscriber data management (SDM) notification (Notify) message to the SMF+PGW-C 405. The UE identifier (e.g., SUPI), the indicator (e.g., UE policy delivery over EPS indication) indicating that UE policy data may be provided to the UE through EPS, and the UE-PCF identifier may be included in the subscriber data management (SDM) notification message.

Step 7: The SMF+PGW-C 405 may request the SM-PCF 407 to transfer the changed UE policy. In this case, the SMF+PGW-C 405 may transfer at least one of the UE identifier, the indicator indicating that the UE policy data may be provided to the UE through the EPS, and the UE-PCF identifier, received from the UDM+HSS 409, to the SM-PCF 407 in step 6. The SMF+PGW-C 405 may transmit a session management policy (SM policy) control update request message to the SM-PCF 407.

Step 8a: In step 7, the SM-PCF 407 may request to establish an association with the UE-PCF 408 capable of providing the changed UE policy requested from the SMF+PGW-C 405. The association establishment between the SM-PCF 407 and the UE-PCF 408 may refer to a policy association establishment for the UE policy. For example, when the SMF+PGW-C 405 provides the UE identifier and the UE-PCF identifier in step 7, the SM-PCF 407 may request the UE-PCF association establishment when it is determined that the UE has never established the association with the UE-PCF. In step 7, the SM-PCF 407 may request the changed UE policy data from the UE-PCF 408 capable of providing the changed UE policy requested from the SMF+PGW-C 405. In this case, the SM-PCF 407 may provide the UE-PCF 408 with at least one of the UE identifier (e.g., SUPI) and/or the indicator (e.g., UE policy delivery over EPS indication) (not shown) indicating that UE policy data may be provided to the UE through the EPS. The association between the SM-PCF 407 and the UE-PCF 408 may be to create a new interface for communication.

Step 8b: In step 7, the SM-PCF 407 may request to modify association with the UE-PCF 408 capable of providing the changed UE policy requested from the SMF+PGW-C 405. For example, when the SMF+PGW-C 405 provides the UE identifier and the UE-PCF identifier in step 7, if it is determined that the UE has established the association with the UE-PCF, the SM-PCF 407 may request to modify the existing UE-PCF association. In step 7, the SM-PCF 407 may request the changed UE policy data from the UE-PCF 408 capable of providing the changed UE policy requested from the SMF+PGW-C 405. In this case, the SM-PCF 407 may provide the UE-PCF 408 with at least one of the UE identifier (e.g., SUPI) and/or the indicator (e.g., UE policy delivery over EPS indication) (not shown) indicating that UE policy data may be provided to the UE through the EPS.

In steps 8a and 8b above, the UE-PCF association establish/modification request and the changed UE policy data request for the UE-PCF may be transmitted simultaneously or using separate messages in each step. Further, the UE-PCF association establish/modification request may be omitted in each step. Steps 8a and 8b may be selectively performed according to the determination of the SM-PCF 407.

Step 9a: Upon receiving the UE-PCF association establish request in step 8a, the UE-PCF 408 may provide the SM-PCF 407 with the UE-PCF association establish result (success/failure, accept/reject, etc.). The UE-PCF 408 may store which SM-PCF 407 the UE-PCF association has been made with (e.g., the relationship between the UE-PCF association ID and the PCF ID or PCF instance ID of the SM-PCF). Upon receiving the changed UE policy data request in step 8a, the UE-PCF 408 may transfer the changed UE policy data to the SM-PCF 407. In this case, the UE-PCF 408 may create and provide UE policy data in a format readable only by the UE 401. For example, the UE-PCF 408 may include the UE policy data in a UE policy container and then provide the same to the SM-PCF 407. In this case, the SM-PCF 407 may recognize that the UE policy container is received from the UE-PCF, but may not read what kind of data (e.g., URSP, ANDSP) is included in the UE policy container and/or the value of the data stored in the UE policy container. Here, the UE policy container may be a scheme used in 5GS. The UE policy container may have a format that may be interpreted only by the UE during the delivery process.

Step 9b: Upon receiving the UE-PCF association modification request in step 8b, the UE-PCF 408 may provide the SM-PCF 407 with the UE-PCF association modification result (success/failure, accept/reject, etc.). Upon receiving the changed UE policy data request in step 8b, the UE-PCF 408 may transfer the changed UE policy data to the SM-PCF 407. In this case, the UE-PCF 408 may create and provide UE policy data in a format readable only by the UE. For example, the UE-PCF 408 may include the UE policy data in a UE policy container and then provide the same to the SM-PCF 407. In this case, the SM-PCF 407 may recognize that the UE policy container is received from the UE-PCF 408, but may not read what kind of data (e.g., URSP, ANDSP) is included in the UE policy container and/or the value of the data stored in the UE policy container. Here, the UE policy container may be a scheme used in 5GS. The UE policy container may have a format that may be interpreted only by the UE during the delivery process.

Step 10: The SM-PCF 407 may transfer the changed UE policy to the SMF+PGW-C 405. The SM-PCF 407 may transmit an SM policy control update response message to the SMF+PGW-C 405. When the SM-PCF 407 receives the UE policy information from the UE-PCF 408 in the UE policy container format, the SM-PCF 407 may transfer the same, as it is, to the SM+PGW-C 405. When the SM-PCF 407 receives UE policy data from the UE-PCF 408, the SM-PCF 407 may create and provide UE policy data in a format readable only by the UE. For example, the SM-PCF 407 may include the UE policy data in the UE policy container and then provide the UE policy container to the SMF+PGW-C 405. In this case, the SMF+PGW-C 405 may recognize that the UE policy container is received from the SM-PCF 407, but may not read what kind of data (e.g., URSP, ANDSP) is included in the UE policy container and/or the value of the data stored in the UE policy container.

Step 11: The SMF+PGW-C 405 may transmit an update bearer request message to the SGW 404. The SMF+PGW-C 405 may include the UE policy (including the UE policy container format) received from the SM-PCF 407 in protocol configuration options (PCOs) and may transfer the same to the SGW 404. The PCO is used to exchange information between the UE 401 and the PDN GW, and other EPS entities (e.g., the eNodeB 402, the MME 403, and the SGW 404) present in the connection between the UE 401 and the PDN GW may not read the information included in the PCO.

Step 12: The SGW 404 may transmit an update bearer request message to the MME 403. The SGW 404 may transfer the PCO including the UE policy (including the UE policy container format) received in step 11 to the MME 403.

Step 13: The MME 403 may transmit a downlink non-access stratum (NAS) transport message to the eNodeB 402. The MME 403 may transfer the PCO including the UE policy (including the UE policy container format) received in step 12 to the eNodeB 402.

Step 14: The eNodeB 402 may transmit a direct NAS transport message to the UE 401. The eNodeB 402 may transfer the PCO including the UE policy (including the UE policy container format) received in step 13 to the UE 401.

In steps 10 to 14, it may be transmitted in the form of a UE policy (including UE policy container format) rather than PCO format.

Step 15: The UE 401 may store the received UE policy. When the UE 401 has a previously stored UE policy, the UE 401 may change, modify, and/or delete the UE policy based on the received UE policy. The UE 401 may obtain information about the included UE policy by interpreting the received PCO. When the UE policy container scheme is included, the UE 401 may obtain information about the UE policy by interpreting the same.

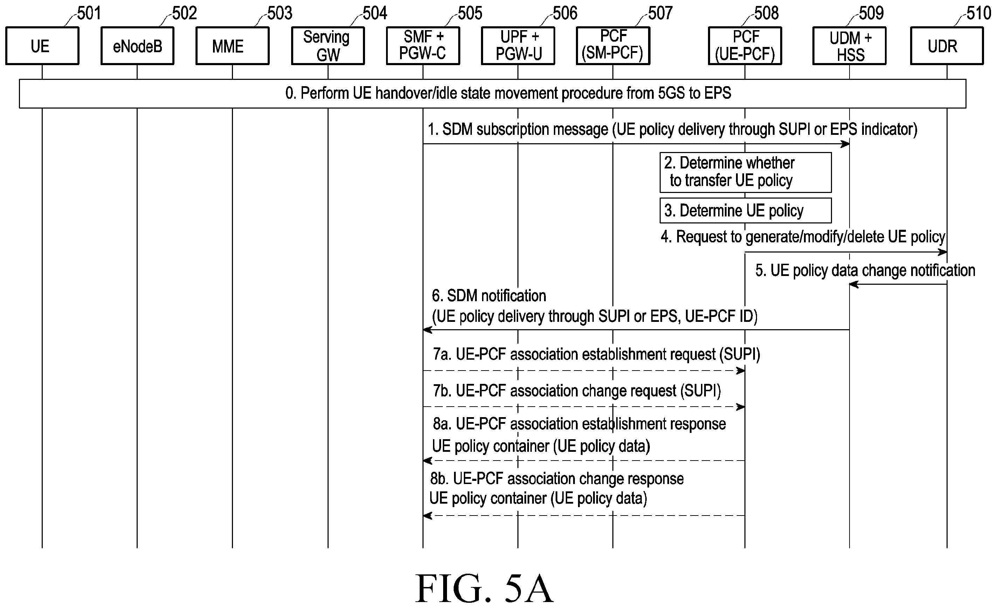

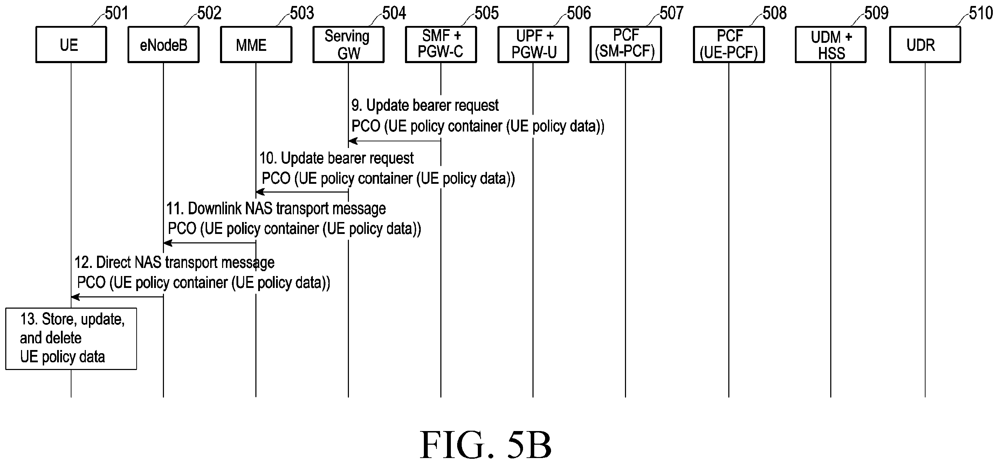

FIGS. 5A and 5B are views illustrating a method for a core network to transfer a UE policy to a UE in an EPS/5GS interworking system according to an embodiment of the disclosure.

Step 0: A handover procedure or an idle state movement procedure may be performed so that the UE connected to the network through the 5GS may be connected to the network through the EPS. The procedure for moving the network may include a process in which the UE is registered (attach) in the EPS through a tracking area update procedure, a process in which the UE establishes an EPS connection, a process in which the SMF+PGW-C maintains information related to the PDU session used by the UE in the 5GS, and a process in which the UE deletes information unnecessary in the EPS (e.g., SM context, AM context, UE context, SM policy, AM policy, UE policy, 5GS parameter, or the like) while moving the network to the EPS.

Step 1: The SMF+PGW-C 505 may notify the UDM+HSS 509 that the UE policy may be transferred to the currently connected UE through the EPS. In determining whether the UE policy may be transferred to the currently connected UE 501 through the EPS, the SMF+PGW-C 505 may refer to (1) whether the UE is a UE connectable to the 5GS and the EPS, (2) whether the UE is currently connected through the EPS, (3) a preferred network of the UE, or the like for the currently connected UE. In this case, the SMF+PGW-C 505 may provide the UE identifier (e.g., SUPI) and an indicator (e.g., UE policy delivery over EPS indication) indicating that the UE policy may be transferred to the UE 501 through the EPS to the UDM+HSS 509. The SMF+PGW-C 505 may transmit a subscriber data management (SDM) subscription message to the UDM+HSS 509. The operation of step 1 may be performed before step 0, during step 0, or after step 0.

Step 2: The UE-PCF 508 may determine whether UE policy information (e.g., URSP rule) should be transmitted to the UE 501. When a change (including generation, modification, deletion, or the like) occurs in UE policy information owned by the UE-PCF 508, the UE-PCF 508, the UE-PCF 408 may determine that the UE policy information should be transmitted to the UE 501 when it is notified by the UDR, NWDAF, AF, or another NF, not shown, that the change has occurred, or when it is requested to change the UE policy information.

Step 3: The UE-PCF 508 may determine a UE policy. The UE-PCF 508 may determine a target UE for which UE policy information needs to be changed. The target UE may include one or more UEs or one UE group.

Step 4: The UE-PCF 508 may transmit the changed UE policy information to the UDR 510. The changes in UE policy information may include generating, modifying, and deleting UE policy information. According to an embodiment, the UE policy information may be included in the UE policy change request message.

Step 5: The UDR 510 may notify the UDM+HSS 509 that the UE policy data has been changed.

Step 6: The UDM+HSS 509 may notify the SMF+PGW-C 505 that the UE policy data has been changed and may be provided to the UE 501 through the EPS. Here, the UDM+HSS 509 may provide a UE identifier (e.g., SUPI), an indicator (e.g., UE policy delivery over EPS indication) indicating that UE policy data may be provided to the UE through the EPS, and a UE-PCF identifier (e.g., PCF ID of the UE-PCF and PCF instance ID of the UE-PCF). The UDM+HSS 509 may transmit an SDM notification (Notify) message to the SMF+PGW-C 505. The UE identifier (e.g., SUPI), the indicator (e.g., UE policy delivery over EPS indication) indicating that UE policy data may be provided to the UE through EPS, and the UE-PCF identifier may be included in the subscriber data management (SDM) notification message.

Step 7a: The SMF+PGW-C 505 may request to establish an association with the UE-PCF 508 capable of providing the changed UE policy. For example, when the UDM+HSS 509 provides the UE identifier and the UE-PCF identifier in step 6, the SMF+PGW-C 505 may request the UE-PCF association establishment when it is determined that the UE has never established the association with the UE-PCF 508. The SMF+PGW-C 505 may request the changed UE policy data from the UE-PCF 508 capable of providing the changed UE policy. In this case, the SMF+PGW-C 505 may provide the UE-PCF 508 with at least one of the UE identifier (e.g., SUPI) and/or the indicator (e.g., UE policy delivery over EPS indication) (not shown) indicating that UE policy data may be provided to the UE through the EPS.

Step 7b: The SMF+PGW-C 505 may request to modify the association with the UE-PCF capable of providing the changed UE policy. For example, when the UDM+HSS 509 provides the UE identifier and the UE-PCF identifier in step 6, if it is determined that the UE has established the association with the UE-PCF, the SMF+PGW-C 505 may request to modify the existing UE-PCF association. The SMF+PGW-C 505 may request the changed UE policy data from the UE-PCF 508 capable of providing the changed UE policy. In this case, the SMF+PGW-C 505 may provide the UE-PCF 508 with at least one of the UE identifier (e.g., SUPI) and/or the indicator (e.g., UE policy delivery over EPS indication) (not shown) indicating that UE policy data may be provided to the UE through the EPS.

In steps 7a and 7b above, the UE-PCF association establish/modification request and the changed UE policy data request for the UE-PCF may be transmitted simultaneously or using separate messages in each step. Further, the UE-PCF association establish/modification request may be omitted in each step. Steps 7a and 7b may be selectively performed according to the determination of the SMF+PGW-C 505.

Step 8a: Upon receiving the UE-PCF association establish request in step 7a, the UE-PCF 508 may provide the SMF+PGW-C 505 with the UE-PCF association establish result (success/failure, accept/reject, etc.). The UE-PCF 508 may store which SMF+PGW-C 505 the UE-PCF association has been made with (e.g., the relationship between the UE-PCF association ID and the SMF ID or SMF instance ID of the SMF+PGW-C). Upon receiving the changed UE policy data request in step 7a, the UE-PCF 508 may transfer the changed UE policy data to the SMF+PGW-C 505. In this case, the UE-PCF 508 may create and provide UE policy data in a format readable only by the UE. For example, the UE-PCF 508 may include the UE policy data in the UE policy container and then provide the UE policy container to the SMF+PGW-C 505. In this case, the SMF+PGW-C 505 may recognize that the UE policy container is received from the UE-PCF 508, but may not read what kind of data (e.g., URSP, ANDSP) is included in the UE policy container and/or the value of the data stored in the UE policy container. Here, the UE policy container may be a scheme used in 5GS. The UE policy container may have a format that may be interpreted only by the UE during the delivery process.

Step 8b: Upon receiving the UE-PCF association modification request in step 7b, the UE-PCF 508 may provide the SMF+PGW-C 505 with the UE-PCF association modification result (success/failure, accept/reject, etc.). The UE-PCF 508 may store which SMF+PGW-C the UE-PCF association has been made with (e.g., the relationship between the UE-PCF association ID and the SMF ID or SMF instance ID of the SMF+PGW-C). Upon receiving the changed UE policy data request in step 7b, the UE-PCF 508 may transfer the changed UE policy data to the SMF+PGW-C 505. In this case, the UE-PCF 508 may create and provide UE policy data in a format readable only by the UE. For example, the UE-PCF 508 may include the UE policy data in the UE policy container and then provide the UE policy container to the SMF+PGW-C 505. In this case, the SMF+PGW-C 505 may recognize that the UE policy container is received from the UE-PCF 508, but may not read what kind of data (e.g., URSP, ANDSP) is included in the UE policy container and/or the value of the data stored in the UE policy container. Here, the UE policy container may be a scheme used in 5GS. The UE policy container may have a format that may be interpreted only by the UE during the delivery process.

Step 9: The SMF+PGW-C 505 may transmit an update bearer request message to the SGW 504. The SMF+PGW-C 505 may include the UE policy (including the UE policy container format) received from the UE-PCF 508 in protocol configuration options (PCOs) and may transfer the same to the SGW 504. The PCO is used to exchange information between the UE 501 and the PDN GW, and other EPS entities (e.g., the eNodeB 502, the MME 503, and the SGW 504) present in the connection between the UE 501 and the PDN GW may not read the information included in the PCO.

Step 10: The SGW 504 may transmit an update bearer request message to the MME 503. The SGW 504 may transfer the PCO including the UE policy (including the UE policy container format) received in step 9 to the MME 503.

Step 11: The MME 503 may transmit a downlink NAS transport message to the eNodeB 502. The MME 503 may transfer the PCO including the UE policy (including the UE policy container format) received in step 10 to the eNodeB 502.

Step 12: The eNodeB 502 may transmit a direct NAS transport message to the UE 501. The ENodeB 502 may transfer the PCO including the UE policy (including the UE policy container format) received in step 11 to the UE 501.

In steps 9 to 12, it may be transmitted in the form of a UE policy (including UE policy container format) rather than PCO format.

Step 13: The UE 501 may store the received UE policy. When the UE 501 has a previously stored UE policy, the UE 401 may change, modify, and/or delete the UE policy based on the received UE policy. The UE 501 may obtain information about the included UE policy by interpreting the received PCO. When the UE policy container scheme is included, the UE 501 may obtain information about the UE policy by interpreting the same.

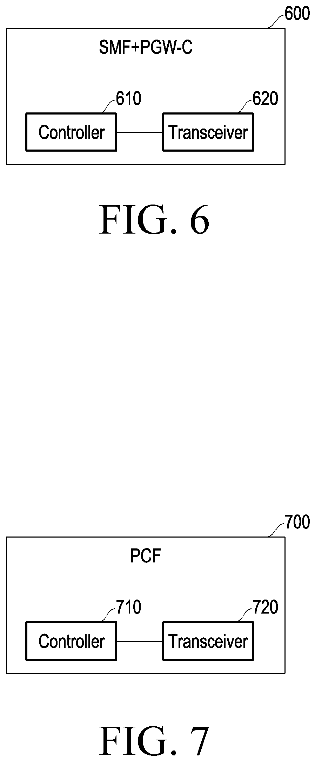

FIG. 6 illustrates a structure of a session management function + packet data network gateway control entity (SMF+PGW-C) 600 according to an embodiment of the disclosure. The above-described device may be a network entity performing a session management function and packet data network gateway-control function (PGW-C). The SMF PGW-C 600 may be a concept that includes the SMF of 5GS and the PGW-C of EPS as one combo node. Referring to FIG. 6, the SMF+PGW-C 600 of the disclosure may include at least one controller (or a processor) 610 and a transceiver 620 including a receiver and a transmitter. The SMF+PGW-C 600 may include a memory (not shown). The transceiver 620 and the memory may be connected to the at least one controller 610 to be operated under the control of the at least one controller 610.

At least one controller 610 may control a series of processes so that the operations of the application function described in connection with FIGS. 1 to 5B of the disclosure may be performed. The transceiver 620 may transmit and receive signals to/from the UE and another network device 700. The signals may include control messages and data information.

FIG. 7 is a view illustrating a structure of a PCF 700 according to an embodiment of the disclosure. The above-described device may be an entity performing policy control functions. The PCF 700 may be divided into an SM-PCF responsible for session management policy (SM policy) and a UE-PCF responsible for mobility management policy (AM policy) and/or UE policy. The SM-PCF and the UE-PCF may be configured as separate devices and, although configured as the same device, may be formed to be logically separated. Referring to FIG. 7, a PCF 700 of the disclosure may include at least one controller (e.g., a processor) 710 and a transceiver 720 including a receiver and a transmitter. The application function may include a memory (not shown). The transceiver 720 and the memory may be connected to the at least one controller 710 to be operated under the control of the at least one controller 710.

At least one controller 710 may control a series of processes so that the operations of the application function described in connection with FIGS. 1 to 5B of the disclosure may be performed. The transceiver 720 may transmit and receive signals to/from the UE and another network device 600. The signals may include control messages and data information.

The network device of the disclosure may include all of the devices corresponding to the network functions, such as AUSF, NEF, NF, UDM, AMF, UPF, SMF, NRF, PCF, SMF+PGW-C, UPF+PGW-U, SM-PCF, UE-PCF, UDM+HSS, and UDR, and the respective network functions may be configured independently.

The embodiments herein are provided merely for better understanding of the disclosure, and the present invention should not be limited thereto or thereby. It should be appreciated by one of ordinary skill in the art that various changes in form or detail may be made to the embodiments without departing from the scope of the present disclosure defined by the following claims. Further, the embodiments may be practiced in combination.

## Claims

1. A first network entity (600) performing a session management function and a packet data network gateway-control function, SMF+PGW-C, in a wireless communication system, the first network entity comprising:
a transceiver (620); and
at least one processor (610) configured to:
transmit, to a second network entity (700) performing a session management-policy control function, SM-PCF, a request message for updating a user equipment, UE, policy of a UE, and
receive, from the second network entity, a response message for updating the UE policy of the UE, the response message including information about a changed UE policy of the UE,
wherein the request message includes information used for association establishment of the UE policy between the second network entity and a third network entity performing a UE-policy control function, UE-PCF.

2. The first network entity of claim 1, wherein the at least one processor is further configured to:
receive, from a fourth network entity performing a unified data management and home subscriber server, UDM+HSS, a first message including at least one of an indicator indicating that the UE policy has been changed, and
wherein the first message further includes at least one of an identifier indicating the UE or an identifier indicating the third network entity.

3. The first network entity of claim 1,
wherein the information used for association establishment of the UE policy includes at least one of an identifier of the UE, an indicator indicating that the UE policy is transferable through a first network to the UE, and an identifier indicating the third network entity, and
wherein the UE moves from a second network to the first network.

4. The first network entity of claim 1, wherein the at least one processor is further configured to:
transmit, to the UE, a second message including a UE policy container including the information about the changed UE policy,
wherein the response message includes the UE policy container including the information about the changed UE policy.

5. A method performed by a first network entity (600)
performing a session management function and a packet data network gateway-control function, SMF+PGW-C, in a wireless communication system, the method comprising:
transmitting, to a second network entity (700)
performing a session management-policy control function, SM-PCF, a request message for updating a user equipment, UE, policy of a UE; and
receiving, from the second network entity, a response message for updating the UE policy of the UE, the response message including information about a changed UE policy of the UE,
wherein the request message includes information used for association establishment of the UE policy between the second network entity and a third network entity performing a UE-policy control function, UE-PCF.

6. The method of claim 5, further comprising:
receiving, from a fourth network entity performing a unified data management and home subscriber server, UDM+HSS, a first message including at least one of an indicator indicating that the UE policy has been changed, and
wherein the first message further includes at least one of an identifier indicating the UE or an identifier indicating the third network entity.

7. The method of claim 5, wherein the information used for association establishment of the UE policy further includes at least one of an identifier of the UE, an indicator indicating that the UE policy is transferable through a first network to the UE, and an identifier indicating the third network entity, and
wherein the UE moves from a second network to the first network.

8. The method of claim 5, further comprising:
transmitting, to the UE, a second message including a UE policy container including the information about the changed UE policy,
wherein the response message includes the UE policy container including the information about the changed UE policy.

9. A second network entity (700)
performing a session management-policy control function, SM-PCF, in a wireless communication system, the second network entity comprising:
a transceiver (720); and
at least one processor (710) configured to:
receive, from a first network entity (600)
performing a session management function and a packet data network gateway-control, SMF+PGW-C, a request message for updating a user equipment, UE, policy of a UE,
transmit, to the first network entity, a response message for updating the UE policy of the UE, the response message including information about a changed UE policy of the UE, and
perform association establishment for the UE policy with a third network entity performing a UE-policy control function, UE-PCF, using information included in the request message.

10. The second network entity of claim 9, wherein the information used for association establishment for the UE policy includes at least one of an identifier of the UE, an indicator indicating that the UE policy is transferable through a first network to the UE, and an identifier indicating the third network entity, and
wherein the UE moves from a second network to the first network.

11. The second network entity of claim 10, wherein the indicator indicating that the UE policy is transferable through the first network to the UE is transmitted from a fourth network entity performing a user data repository, UDR.

12. The second network entity of claim 9, wherein the information about the changed UE policy is included in a UE policy container.

13. A method performed by a second network entity (700)
performing a session management-policy control function, SM-PCF, in a wireless communication system, the method comprising:
receiving, from a first network entity (600) performing a session management function and a packet data network gateway-control function, SMF+PGW-C, a request message for updating a user equipment, UE, policy of a UE;
transmitting, to the first network entity, a response message for updating the UE policy of the UE, the response message including information about a changed UE policy of the UE; and
performing association establishment for the UE policy with a third network entity performing a UE-policy control function, UE-PCF, using information included in the request message.

14. The method of claim 13, wherein the information used for association establishment for the UE policy includes at least one of an identifier of the UE, an indicator indicating that the UE policy is transferable through a first network to the UE, and an identifier indicating the third network entity, and
wherein the UE moves from a second network to the first network.

15. The method of claim 14, wherein the indicator indicating that the UE policy is transferable through the first network to the UE is transmitted from a fourth network entity performing a user data repository, UDR, and
wherein the information about the changed UE policy is included in a UE policy container.

## Patentansprüche

1. Erste Netzwerkeinheit (600), die eine Sitzungsverwaltungsfunktion und eine Paketdatennetz-Gateway-Steuerungsfunktion, SMF+PGW-C, in einem drahtlosen Kommunikationssystem ausführt, wobei die erste Netzwerkeinheit Folgendes umfasst:
einen Transceiver (620); und
mindestens einen Prozessor (610), der zu Folgendem konfiguriert ist:
Übertragen einer Anforderungsnachricht zur Aktualisierung einer Benutzergerät(UE)-Richtlinie eines UE an eine zweite Netzwerkeinheit (700), die eine Sitzungsverwaltungs-Richtliniensteuerungsfunktion, SM-PCF, ausführt, und
Empfangen einer Antwortnachricht zur Aktualisierung der UE-Richtlinie des UE von der zweiten Netzwerkeinheit, wobei die Antwortnachricht Informationen über eine geänderte UE-Richtlinie des UE enthält,
wobei die Anforderungsnachricht Informationen enthält, die für den Aufbau der Assoziation der UE-Richtlinie zwischen der zweiten Netzwerkeinheit und einer dritten Netzwerkeinheit verwendet werden, die eine UE-Richtliniensteuerungsfunktion, UE-PCF, ausführt.

2. Erste Netzwerkeinheit nach Anspruch 1, wobei der mindestens eine Prozessor ferner zu Folgendem konfiguriert ist:
Empfangen einer ersten Nachricht, die mindestens einen Indikator enthält, der anzeigt, dass die UE-Richtlinie geändert wurde, von einer vierten Netzwerkeinheit, die einen einheitlichen Datenverwaltungs- und Heimteilnehmerserver, UDM+HSS, ausführt, und
wobei die erste Nachricht ferner eine Kennung, die das UE anzeigt, und/oder eine Kennung enthält, die die dritte Netzwerkeinheit anzeigt.

3. Erste Netzwerkeinheit nach Anspruch 1,
wobei die für den Aufbau der Assoziation der UE-Richtlinie verwendeten Informationen eine Kennung des UE, einen Indikator, der anzeigt, dass die UE-Richtlinie über ein erstes Netzwerk an das UE übertragen werden kann, und/oder eine Kennung enthalten, die die dritte Netzwerkeinheit anzeigt, und
wobei das UE von einem zweiten Netzwerk zu dem ersten Netzwerk wechselt.

4. Erste Netzwerkeinheit nach Anspruch 1, wobei der mindestens eine Prozessor ferner zu Folgendem konfiguriert ist:
Übertragen einer zweiten Nachricht, die einen UE-Richtliniencontainer enthält, der Informationen über die geänderte UE-Richtlinie enthält, an das UE,
wobei die Antwortnachricht den UE-Richtliniencontainer enthält, der die Informationen über die geänderte UE-Richtlinie enthält.

5. Verfahren, das von einer ersten Netzwerkeinheit (600) ausgeführt wird, die eine Sitzungsverwaltungsfunktion und eine Paketdatennetz-Gateway-Steuerungsfunktion, SMF+PGW-C, in einem drahtlosen Kommunikationssystem ausführt, wobei das Verfahren Folgendes umfasst:
Übertragen einer Anforderungsnachricht zur Aktualisierung einer Benutzergerät(UE)-Richtlinie eines UE an eine zweite Netzwerkeinheit (700), die eine Sitzungsverwaltungs-Richtliniensteuerungsfunktion, SM-PCF, ausführt; und
Empfangen einer Antwortnachricht zur Aktualisierung der UE-Richtlinie des UE von der zweiten Netzwerkeinheit, wobei die Antwortnachricht Informationen über eine geänderte UE-Richtlinie des UE enthält,
wobei die Anforderungsnachricht Informationen enthält, die für den Aufbau der Assoziation der UE-Richtlinie zwischen der zweiten Netzwerkeinheit und einer dritten Netzwerkeinheit verwendet werden, die eine UE-Richtliniensteuerungsfunktion, UE-PCF, ausführt.

6. Verfahren nach Anspruch 5, das ferner Folgendes umfasst:
Empfangen einer ersten Nachricht, die mindestens einen Indikator enthält, der anzeigt, dass die UE-Richtlinie geändert wurde, von einer vierten Netzwerkeinheit, die einen einheitlichen Datenverwaltungs- und Heimteilnehmerserver, UDM+HSS, ausführt, und
wobei die erste Nachricht ferner eine Kennung, die das UE anzeigt, und/oder eine Kennung enthält, die die dritte Netzwerkeinheit anzeigt.

7. Verfahren nach Anspruch 5, wobei die für den Aufbau der Assoziation der UE-Richtlinie verwendeten Informationen ferner eine Kennung des UE, einen Indikator, der anzeigt, dass die UE-Richtlinie über ein erstes Netzwerk an das UE übertragen werden kann, und eine Kennung enthalten, die die dritte Netzwerkeinheit anzeigt, und
wobei das UE von einem zweiten Netzwerk zu dem ersten Netzwerk wechselt.

8. Verfahren nach Anspruch 5, das ferner Folgendes umfasst:
Übertragen einer zweiten Nachricht, die einen UE-Richtliniencontainer enthält, der die Informationen über die geänderte UE-Richtlinie enthält, an das UE,
wobei die Antwortnachricht den UE-Richtliniencontainer enthält, der die Informationen über die geänderte UE-Richtlinie enthält.

9. Zweite Netzwerkeinheit (700), die eine Sitzungsverwaltungs-Richtliniensteuerungsfunktion, SM-PCF, in einem drahtlosen Kommunikationssystem ausführt, wobei die zweite Netzwerkeinheit Folgendes umfasst:
einen Transceiver (720); und
mindestens einen Prozessor (710), der zu Folgendem konfiguriert ist:
Empfangen einer Anforderungsnachricht zur Aktualisierung einer Benutzergerät(UE)-Richtlinie eines UE von einer ersten Netzwerkeinheit (600), die eine Sitzungsverwaltungsfunktion und eine Paketdatennetz-Gateway-Steuerungsfuntion, SMF+PGW-C, ausführt,
Übertragen einer Antwortnachricht zur Aktualisierung der UE-Richtlinie des UE an die erste Netzwerkeinheit, wobei die Antwortnachricht Informationen über eine geänderte UE-Richtlinie des UE enthält, und
Ausführen des Aufbaus der Assoziation für die UE-Richtlinie mit einer dritten Netzwerkeinheit, die eine UE-Richtliniensteuerungsfunktion, UE-PCF, unter Verwendung von Informationen ausführt, die in der Anforderungsnachricht enthalten sind.

10. Zweite Netzwerkeinheit nach Anspruch 9, wobei die für den Aufbau der Assoziation für die UE-Richtlinie verwendeten Informationen eine Kennung des UE, einen Indikator, der anzeigt, dass die UE-Richtlinie über ein erstes Netzwerk an das UE übertragen werden kann, und/oder eine Kennung enthalten, die die dritte Netzwerkeinheit anzeigt, und
wobei das UE von einem zweiten Netzwerk zu dem ersten Netzwerk wechselt.

11. Zweite Netzwerkeinheit nach Anspruch 10, wobei der Indikator, der anzeigt, dass die UE-Richtlinie über das erste Netzwerk an das UE übertragen werden kann, von einer vierten Netzwerkeinheit übertragen wird, die ein Benutzerdaten-Repository, UDR, ausführt.

12. Zweite Netzwerkeinheit nach Anspruch 9, wobei die Informationen über die geänderte UE-Richtlinie in einem UE-Richtliniencontainer enthalten sind.

13. Verfahren, das von einer zweiten Netzwerkeinheit (700) ausgeführt wird, die eine Sitzungsverwaltungs-Richtliniensteuerungsfunktion, SM-PCF, in einem drahtlosen Kommunikationssystem ausführt, wobei das Verfahren Folgendes umfasst:
Empfangen einer Anforderungsnachricht zur Aktualisierung einer Benutzergerät(UE)-Richtlinie eines UE von einer ersten Netzwerkeinheit (600), die eine Sitzungsverwaltungsfunktion und eine Paketdatennetz-Gateway-Steuerungsfunktion, SMF+PGW-C, ausführt;
Übertragen einer Antwortnachricht zur Aktualisierung der UE-Richtlinie des UE an die erste Netzwerkeinheit, wobei die Antwortnachricht Informationen über eine geänderte UE-Richtlinie des UE enthält; und
Ausführen des Aufbaus der Assoziation für die UE-Richtlinie mit einer dritten Netzwerkeinheit, die eine UE-Richtliniensteuerungsfunktion, UE-PCF, unter Verwendung von Informationen ausführt, die in der Anforderungsnachricht enthalten sind.

14. Verfahren nach Anspruch 13, wobei die für den Aufbau der Assoziation für die UE-Richtlinie verwendeten Informationen eine Kennung des UE, einen Indikator, der anzeigt, dass die UE-Richtlinie über ein erstes Netzwerk an das UE übertragen werden kann, und/oder eine Kennung enthalten, die die dritte Netzwerkeinheit anzeigt, und
wobei das UE von einem zweiten Netzwerk zu dem ersten Netzwerk wechselt.

15. Verfahren nach Anspruch 14, wobei der Indikator, der anzeigt, dass die UE-Richtlinie über das erste Netzwerk an das UE übertragen werden kann, von einer vierten Netzwerkeinheit übertragen wird, die ein Benutzerdaten-Repository, UDR, ausführt, und
wobei die Informationen über die geänderte UE-Richtlinie in einem UE-Richtliniencontainer enthalten sind.

## Revendications

1. Première entité réseau (600) effectuant une fonction de gestion de session et une fonction de contrôle de passerelle de réseau de données par paquets (SMF+PGW-C) dans un système de communication sans fil, la première entité réseau comprenant :
un émetteur-récepteur (620) ; et
au moins un processeur (610) configuré pour :
transmettre, à une deuxième entité réseau (700) effectuant une fonction de contrôle de politique de gestion de session (SM-PCF) un message de demande pour mettre à jour une politique d'équipement d'utilisateur (UE) d'un UE, et
recevoir, de la deuxième entité réseau, un message de réponse pour mettre à jour la politique d'UE de l'UE, le message de réponse incluant des informations sur une politique d'UE modifiée de l'UE,
où le message de demande inclut des informations utilisées pour l'établissement d'une association de la politique d'UE entre la deuxième entité réseau et une troisième entité réseau effectuant une fonction de contrôle de politique d'UE (UE-PCF).

2. Première entité réseau selon la revendication 1, où l'au moins un processeur est en outre configuré pour :
recevoir, d'une quatrième entité réseau effectuant une gestion de données unifiée et d'un serveur d'abonnés résidentiels (UDM+HSS), un premier message incluant au moins l'un d'un indicateur indiquant que la politique d'UE a été modifiée, et
où le premier message inclut en outre au moins l'un d'un identifiant indiquant l'UE ou un identifiant indiquant la troisième entité réseau.

3. Première entité réseau selon la revendication 1,
où les informations utilisées pour l'établissement d'une association de la politique d'UE incluent au moins l'un parmi un identifiant de l'UE, un indicateur indiquant que la politique d'UE est transférable via un premier réseau à l'UE, et un identifiant indiquant la troisième entité réseau, et
où l'UE se déplace d'un deuxième réseau au premier réseau.

4. Première entité réseau selon la revendication 1, où l'au moins un processeur est en outre configuré pour :
transmettre, à l'UE, un deuxième message incluant un conteneur de politique d'UE incluant les informations sur la politique d'UE modifiée,
où le message de réponse inclut le conteneur de politique d'UE incluant les informations sur la politique d'UE modifiée.

5. Procédé mis en œuvre par une première entité réseau (600) effectuant une fonction de gestion de session et une fonction de contrôle de passerelle de réseau des données par paquets (SMF+PGW-C) dans un système de communication sans fil, le procédé comprenant :
transmettre, à une deuxième entité réseau (700) effectuant une fonction de contrôle de politique de gestion de session (SM-PCF) un message de demande pour mettre à jour une politique d'équipement d'utilisateur (UE) d'un UE ; et
recevoir, de la deuxième entité réseau, un message de réponse pour mettre à jour la politique UE de l'UE, le message de réponse incluant des informations sur une politique d'UE modifiée de l'UE,
où le message de demande inclut des informations utilisées pour l'établissement d'une association de la politique d'UE entre la deuxième entité réseau et une troisième entité réseau effectuant une fonction de contrôle de politique d'UE (UE-PCF).

6. Procédé selon la revendication 5, comprenant en outre :
recevoir, d'une quatrième entité réseau effectuant une gestion de données unifiée et d'un serveur d'abonnés résidentiels (UDM+HSS), un premier message incluant au moins l'un d'un indicateur indiquant que la politique d'UE a été modifiée, et
où le premier message inclut en outre au moins l'un d'un identifiant indiquant l'UE ou un identifiant indiquant la troisième entité réseau.

7. Procédé selon la revendication 5, où les informations utilisées pour l'établissement d'une association de la politique d'UE incluent en outre au moins l'un parmi un identifiant de l'UE, un indicateur indiquant que la politique d'UE est transférable via un premier réseau à l'UE, et un identifiant indiquant la troisième entité réseau, et
où l'UE se déplace d'un deuxième réseau au premier réseau.

8. Procédé selon la revendication 5, comprenant en outre :
transmettre, à l'UE, un deuxième message incluant un conteneur de politique d'UE incluant les informations sur la politique d'UE modifiée,
où le message de réponse inclut le conteneur de politique d'UE incluant les informations sur la politique d'UE modifiée.

9. Deuxième entité réseau (700) effectuant une fonction de contrôle de politique de gestion de session (SM-PCF) dans un système de communication sans fil, la deuxième entité réseau comprenant :
un émetteur-récepteur (720) ; et
au moins un processeur (710) configuré pour :
recevoir, d'une première entité réseau (600) effectuant une fonction de gestion de session et une fonction de contrôle de passerelle de réseau de données par paquets, (SMF+PGW-C), un message de demande pour mettre à jour une politique d'équipement d'utilisateur (UE) d'un UE,
transmettre, à la première entité réseau, un message de réponse pour mettre à jour la politique d'UE de l'UE, le message de réponse incluant des informations sur une politique d'UE modifiée de l'UE, et
effectuer l'établissement d'une association pour la politique d'UE avec une troisième entité réseau effectuant une fonction de contrôle de politique d'UE (UE-PCF), en utilisant des informations incluses dans le message de demande.

10. Deuxième entité réseau selon la revendication 9, où les informations utilisées pour l'établissement d'une association pour la politique d'UE incluent au moins l'un parmi un identifiant de l'UE, un indicateur indiquant que la politique d'EU est transférable via un premier réseau à l'UE, et un identifiant indiquant la troisième entité réseau, et
où l'UE se déplace d'un deuxième réseau au premier réseau.

11. Deuxième entité réseau selon la revendication 10, où l'indicateur indiquant que la politique d'UE est transférable via le premier réseau à l'UE est transmis à partir d'une quatrième entité réseau effectuant un référentiel de données d'utilisateur (UDR).

12. Deuxième entité réseau selon la revendication 9, où les informations sur la politique d'UE modifiée sont incluses dans un conteneur de politique d'UE.

13. Procédé mis en œuvre par une deuxième entité réseau (700) effectuant une fonction de contrôle de politique de gestion de session (SM-PCF) dans un système de communication sans fil, le procédé comprenant :
recevoir, d'une première entité réseau (600) effectuant une fonction de gestion de session et une fonction de contrôle de passerelle de réseau de données par paquets (SMF+PGW-C), un message de demande pour mettre à jour une politique d'équipement d'utilisateur (UE) d'un UE ;
transmettre, à la première entité réseau, un message de réponse pour mettre à jour la politique d'UE de l'UE, le message de réponse incluant des informations sur une politique d'UE modifiée de l'UE ; et
effectuer l'établissement d'une association pour la politique d'UE avec une troisième entité réseau effectuant une fonction de contrôle de politique d'UE (UE-PCF), en utilisant des informations incluses dans le message de demande.

14. Procédé selon la revendication 13, où les informations utilisées pour l'établissement d'une association pour la politique d'UE incluent au moins l'un parmi un identifiant de l'UE, un indicateur indiquant que la politique d'UE est transférable via un premier réseau à l'UE, et un identifiant indiquant la troisième entité réseau, et
où l'UE se déplace d'un deuxième réseau au premier réseau.

15. Procédé selon la revendication 14, où l'indicateur indiquant que la politique d'UE est transférable via le premier réseau à l'UE est transmis à partir d'une quatrième entité réseau effectuant un référentiel de données d'utilisateur (UDR), et
où les informations sur la politique d'UE modifiée sont incluses dans un conteneur de politique d'UE.
